# EUROPÄISCHE PATENTSCHRIFT

(11) **EP 3 645 911 B1**
(45) Veröffentlichungstag und Bekanntmachung des Hinweises auf die Patenterteilung: **07.07.2021**
(21) Anmeldenummer: 18732242.5
(22) Anmeldetag: 24.05.2018
(51) Int. Cl.: F16F 15/14

(54) **DREHSCHWINGUNGSTILGER**
TUNED MASS DAMPER
BATTEUR

(30) Priorität: 29.06.2017 DE 102017114514
(43) Veröffentlichungstag der Anmeldung: 06.05.2020
(73) Patentinhaber: Schaeffler Technologies AG & Co. KG, 91074 Herzogenaurach (DE)
(72) Erfinder: MAIENSCHEIN, Stephan, 76534 Baden-Baden (DE)
(86) Internationale Anmeldenummer: PCT/DE2018/100502
(87) Internationale Veröffentlichungsnummer: WO 2019/001619

(56) Entgegenhaltungen:
- WO-A1-2017/072337
- WO-A1-2017/072338
- DE-A1-102016 108 028

## Beschreibung

Die Erfindung betrifft einen Drehschwingungstilger umfassend ein um eine Drehachse drehbares Antriebsteil und ein über wenigstens ein Federelement mit diesem gekoppeltes, gegen das Federelement um die Drehachse relativ zum Antriebsteil verdrehbares Tilgermasseteil.

Ein solcher Drehschwingungstilger wird in drehmomentübertragenden Anordnungen zur Tilgung oder Bedämpfung etwaiger Drehschwingungen eingesetzt, es handelt sich um einen sogenannten Feder-Masse-Tilger. Beispielsweise wird ein solcher Drehschwingungstilger in einem Antriebsstrang eines Kraftfahrzeugs angeordnet, um etwaige, von einer Brennkraftmaschine zumeist systemimmanent in den Antriebsstrang eingetragene Drehschwingungen zu tilgen.

Ein solcher Drehschwingungstilger besteht üblicherweise aus einem um eine Drehachse drehbare und drehmomentbelasteten Antriebsteil sowie einem relativ zu dem Antriebsteil um die Drehachse verdrehbaren Tilgermasseteil, wobei Antriebsteil und Tilgermasseteil üblicherweise über eine oder mehrere um den Umfang verteilt angeordnete Schraubendruckfedern relativ zueinander gegen die Federwirkung verdrehbar sind. Aufgrund des Trägheitsmoments verlagert sich das Tilgermasseteil bei einem Eintrag von Drehschwingungen über das Antriebsteil entgegen der Wirkung der Schraubendruckfedern, so dass über die Federdeformation sowie die Relativbewegung der Schwingung Energie entzogen wird und zeitverzögert wieder dem System zugeführt wird. Über diese Tilgung kann eine Beruhigung des Drehmomentsverlaufs erreicht werden, so dass das resultierende, beispielsweise an ein nachgeschaltetes Getriebe abgegebene Drehmoment homogener ist. Beispiele für derartige Drehschwingungstilger sind in DE 198 40 664 A1 oder DE 10 2014 223 308 A1 beschrieben. Das Dokument WO 2017/072337 A1 offenbart einen Drehschwingungstilger gemäß dem Oberbegriff des Anspruchs 1.

Brennkraftmaschinen, also Verbrennungsmotoren, weisen üblicherweise eine periodische Anregung auf, bei der die Momentenamplituden in Drehrichtung größer sind als entgegengesetzt. Bekannte Drehschwingungstilger erlauben jedoch keine richtungsspezifische Dämpfung, so dass die Schwingungen respektive Momentenamplituden nicht optimal bedämpft werden können.

Der Erfindung liegt damit das Problem zugrunde, einen demgegenüber verbesserten Drehschwingungstilger anzugeben.

Zur Lösung dieses Problems ist bei einem Drehschwingungstilger der eingangs genannten Art erfindungsgemäß vorgesehen, dass das als Schenkelfeder ausgeführte Federelement mit einem Ende drehfest mit dem Antriebsteil gekoppelt und mit dem anderen Ende über eine Koppelrolle, die auf wenigstens einer Führungsbahn rollt mit dem Tilgermasseteil gekoppelt ist, wobei die Führungsbahn derart unsymmetrisch ist, dass die Schenkelfeder bei einer Bewegung aus einer Nulllage je nach Bewegungsrichtung unterschiedlich stark deformiert wird.

Die Erfindung sieht einen unsymmetrisch ausgelegten Drehschwingungstilger vor, bei dem die Dämpfungswirkung abhängig davon ist, in welcher Richtung die Schwingung anliegt, ob sie also in Drehrichtung gegeben ist oder entgegengesetzt der Drehrichtung. Hierüber kann folglich eine richtungssensitive Bedämpfung der Momentenamplituden erreicht werden. Hierfür ist erfindungsgemäß vorgesehen, das Federelement als Schenkelfeder auszuführen, die mit dem Antriebsteil gekoppelt ist, über welches die Schwingungen in den Tilger eingebracht werden. Die Schenkelfeder ist über eine Koppelrolle mit dem Tilgermasseteil gekoppelt, so dass eine Relativbewegung von Schenkelfeder zum Tilgermasseteil, mithin also eine schwingungssensitive Bewegung in und entgegengesetzt der Drehrichtung, möglich ist. Die Koppelrolle rollt hierbei auf wenigstens einer Führungsbahn, so dass sich die umfangsmäßige Koppelstelle von Schenkelfeder zu Tilgermasseteil abhängig vom Grad der Verdrehung der Schenkelfeder zum Tilgermasseteil, bezogen auf eine Nulllage, also einen lastfreien Zustand, entsprechend ändert und je nach Grad der Verdrehung die Schenkelfeder entsprechend deformiert wird, woraus die eigentliche Bedämpfung resultiert.

Erfindungsgemäß ist nun vorgesehen, diese Führungsbahn unsymmetrisch auszulegen, so dass die Schenkelfeder, ausgehend von der Nulllage, bei einer Bewegung in Drehrichtung unterschiedlich stark deformiert wird wie bei einer Bewegung entgegengesetzt der Drehrichtung. Über diese Führungsbahn, die eine gebogene Bahn ist, wird folglich eine unsymmetrische Tilgerkennung um die Nulllage realisiert, letztlich bezüglich der Federwirkung in Umfangsrichtung, so dass je nach Bewegungsrichtung und Deformationsgrad unterschiedliche Steifigkeiten respektive Steifigkeitsänderungen seitens der Schenkelfeder gegeben sind. Vorzugsweise wirken die größeren Steifigkeiten bzw. Steifigkeitsänderungen dann, wenn der Tilger den größten Momentenamplituden entgegenwirkt, wenn die Schenkelfeder also in Drehrichtung verdreht wird.

Der Drehschwingungstilger zeichnet sich demzufolge durch eine unsymmetrische Federkennung aus, die durch die unsymmetrische Führungs- oder Bewegungsbahn, auf der die Koppelrolle rollt, realisiert wird. Denn der Rollenkontaktpunkt bewegt sich bei einer Relativverdrehung der Schenkelfeder in Drehrichtung in Richtung des Anbindungsbereichs des Schenkels bzw. der Schenkelfeder zum Antriebsteil, der Hebelarm der Schenkelfeder wird hierüber kürzer, die Steifigkeit nimmt zu, und zwar dann, wenn der Tilger gegen die größeren oder größten Momentenamplituden wirkt. Bei einer Bewegung entgegen der Drehrichtung wandert der Lager- oder Rollenkontaktpunkt in die andere Richtung zum Schenkelende, der Hebel wird größer, die Steifigkeit nimmt ab, und zwar dann, wenn der Tilger gegen die niedrigeren Momentenamplituden wirkt.

Hinsichtlich der Kopplung von Schenkelfeder und Tilgermasseteil und damit hinsichtlich der Anordnung der Führungsbahn sind unterschiedliche Erfindungsvarianten gegeben. Gemäß einer ersten Variante kann die Führungsbahn an der Schenkelfeder vorgesehen sein und die Koppelrolle um eine feste Drehachse drehbar an dem Tilgermasseteil angeordnet sein. Die Koppelrolle ist also positionsfest relativ zur daran vorbeibewegten Schenkelfeder und deren Führungsbahn. Eine Ausführung der Koppelrolle als Stufenrolle, gegebenenfalls einteilig, oder aber um einen Lagerzapfen am Tilgermasseteil drehgelagert, ist denkbar. Am Tilgermasseteil ist eine entsprechende, schlitzartige Aufnahme vorgesehen, in der die Koppelrolle aufgenommen ist, radial gesehen unterhalb welcher die Schenkelfeder mit ihrer Führungsbahn positioniert ist.

Alternativ hierzu sieht eine zweite Erfindungsvariante vor, die Führungsbahn an dem Tilgermasseteil auszubilden, und die Koppelrolle um eine feste Drehachse drehbar an der Schenkelfeder anzuordnen. Hier ist also die Ausgestaltung umgekehrt, die Koppelrolle ist positionsfest an der Schenkelfeder angeordnet, die Führungsbahn befindet sich am Tilgermasseteil. Auch hier kann die Koppelrolle beispielsweise als Stufenrolle ausgeführt sein.

Eine dritte Erfindungsvariante sieht schließlich vor, sowohl an der Schenkelfeder als auch an der Tilgermasse eine Führungsbahn auszubilden und die Koppelrolle frei drehbar auf beiden Führungsbahnen zu führen, wobei wenigstens eine Führungsbahn unsymmetrisch ist, vorzugsweise aber beide Führungsbahnen unsymmetrisch sind. Hier ist folglich die Koppelrolle frei beweglich zwischen Schenkelfeder und Tilgermasseteil aufgenommen, es handelt sich um eine einfache Rolle, die zwischen zwei Masseabschnitten aufgenommen ist und dort gegebenenfalls über seitliche Abstützvorsprünge oder Kegelnasen axial abgestützt ist. Es ist bereits ausreichend, wenn nur eine Führungsbahn unsymmetrisch ist, um die unsymmetrische Tilger- respektive Federkennung zu realisieren. Zweckmäßig ist es jedoch, wenn beide Führungsbahnen unsymmetrisch sind, wobei die Unsymmetrien miteinander korrespondieren. Dies ermöglicht es, die Steifigkeitsänderung respektive den Deformationsgrad der Schenkelfeder bei einer entsprechenden Auslenkung insbesondere in Drehrichtung noch deutlicher zu erhöhen, da sich die beiden Führungsbahngeometrien bzw. -unsymmetrien quasi "addieren".

Die beiden Unsymmetrien können dabei gleich sein, das heißt, dass die Führungsbahnen gleiche Geometrie aufweisen. Denkbar ist es aber auch, gegebenenfalls aus Platzgründen, die Unsymmetrien ungleich auszugestalten. Hierüber kann in einem relativ breiten Bereich eine entsprechende Einstellung respektive Variation der Federsteifigkeit und damit der Federkennlinie erreicht werden.

Wie bereits beschrieben ist es zweckmäßig, wenn die Deformation bei einer sich aus der Nulllage vom freien Ende der Schenkelfeder entfernenden Koppelrolle größer ist als bei einer Bewegung der Koppelrolle zum freien Ende der Schenkelfeder hin, nachdem in Drehrichtung gesehen die Momentenamplituden größer sind als entgegengesetzt hierzu und einer entsprechend stärkeren Bedämpfung bedürfen, resultierend in einer entsprechend stärkeren Steifigkeitszunahme seitens der deformierten Schenkelfeder.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine Prinzipdarstellung einer Kupplungseinrichtung mit einem integrierten erfindungsgemäßen Drehschwingungstilger,
- Figur 2: eine Prinzipdarstellung des Momentenverlaufs zur Darstellung der im System gegebenen, über den Drehschwingungstilger zu bedämpfenden Schwingungen,
- Figur 3: eine Prinzipdarstellung des Drehschwingungstilgers gemäß einer ersten Erfindungsausgestaltung,
- Figur 4: eine Prinzipdarstellung der Bewegungskopplung von Schenkelfeder und Tilgermasseteil eines Drehschwingungstilgers einer zweiten Ausführungsform, und
- Figur 5: eine Vergleichsdarstellung der Kopplung ohne erfindungsgemäße Unsymmetrie innerhalb der Führungsbahnen.

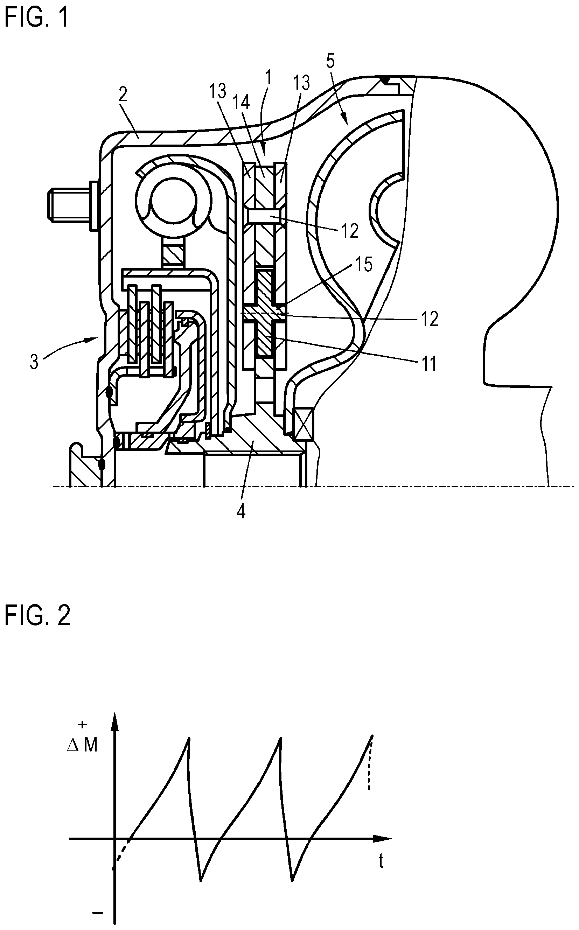

Figur 1 zeigt in einer Prinzipdarstellung ein Anwendungsbeispiel für einen erfindungsgemäßen Drehschwingungstilger 1. Dieser ist in einem Kupplungsgehäuse 2 angeordnet und einer Kupplungseinrichtung 3, die zum Schließen des Kraftflusses dient, nachgeschaltet. Die Kupplungseinrichtung 3 ist in bekannter Weise mit einer Abtriebswelle der nicht gezeigten Brennkraftmaschine gekoppelt, deren Drehmoment über die Kupplungseinrichtung 3 in an sich bekannter Weise auf den Drehschwingungstilger 1 übertragen wird. Dieser weist hierzu ein um eine gemeinsame Drehachse drehbares Antriebsteil 4 auf, das über eine Innenverzahnung auf einer entsprechenden, zu einem nicht gezeigten Getriebe führenden Welle sitzt. Dem Drehschwingungstilger 1 nachgeschaltet ist eine Wandlereinrichtung 5, die hier ebenfalls nur dem Grunde nach dargestellt ist. Der grundsätzliche Aufbau einer solchen Anordnung und deren Funktion ist hinlänglich bekannt.

Über die nicht gezeigte Brennkraftmaschine wird systemimmanent eine Drehmomentschwingung in die in Figur 1 gezeigte Anordnung eingetragen, die über den Drehschwingungstilger 1 bedämpft werden soll. Eine Prinzipdarstellung des Verlaufs einer solchen Drehmomentschwingung respektive der Momentenamplitude ist in Figur 2 dem Grunde nach gezeigt. Längs der Abszisse ist die Zeit t eingetragen, längs der Ordinate das um eine Nulllage schwingungsbedingt variierende Differenzdrehmoment ΔM, wobei längs der Ordinate nach oben die Amplitude in Drehrichtung der Antriebswelle (+) und längs der Ordinate nach unten die Amplitude entgegengesetzt hierzu (-) dargestellt ist. Wie Figur 2 zeigt, ist die Amplitude in Drehrichtung deutlich größer als entgegengesetzt dazu, das heißt, dass ein unsymmetrischer Momentenverlauf gegeben ist.

Erfindungsgemäß ist es nun mit dem Drehschwingungstilger 1 möglich, eine solche unsymmetrische Drehmomentschwankung gezielt zu bedämpfen.

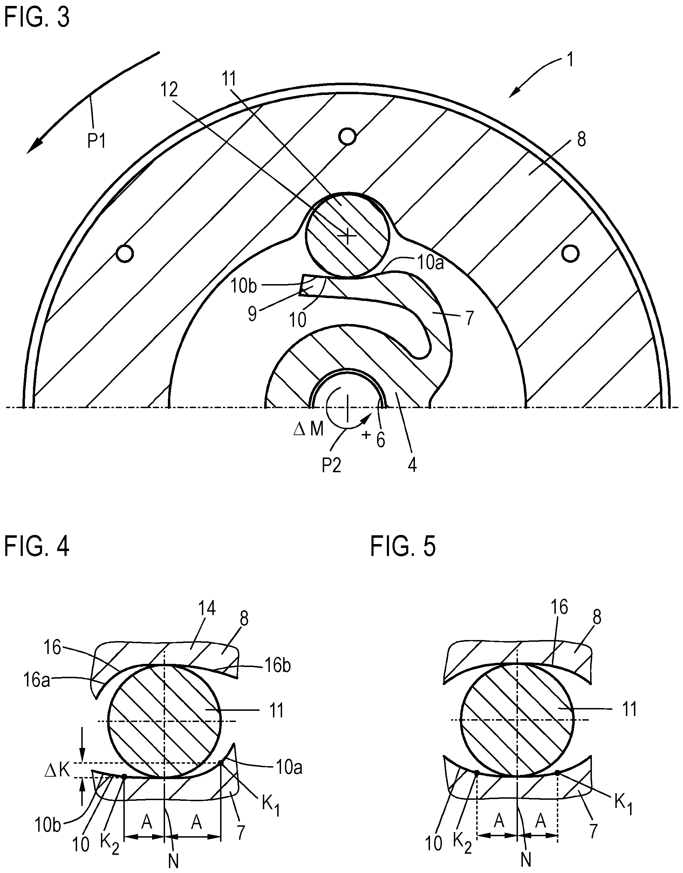

Figur 3 zeigt eine Prinzipdarstellung eines erfindungsgemäßen Drehschwingungstilgers 1 einer ersten Ausführungsform. Gezeigt ist das Antriebsteil 4, das über eine entsprechende Innenverzahnung 6 mit der bereits beschriebenen Welle gekoppelt ist. Am Antriebsteil 4 angebunden ist eine Schenkelfeder 7, die davon radial abragt, wobei die Schenkelfeder 7 fest und einstückig am Antriebsteil 4 befestigt sein kann, sie kann aber auch daran um ein Gelenk im geringen Maße drehgelagert sein oder Ähnliches.

Die Schenkelfeder 7 weist einen zu einem umlaufenden Tilgermasseteil 8 gerichteten Schenkel 9 auf, an dem eine Führungsbahn 10 ausgebildet ist, auf der eine Koppelrolle 11 läuft, die im gezeigten Beispiel um eine feste Drehachse 12 (siehe hierzu auch Figur 1) an dem Tilgermasseteil 8 drehgelagert ist. Das Tilgermasseteil 8, siehe Figur 1, weist hierzu zwei Axialscheiben 13 auf, zwischen denen ein Massering 14 angeordnet ist. Die Koppelrolle 11 ist mit entsprechenden Lagerzapfen 15 in entsprechenden Lagerausnehmungen in den Axialscheiben 13 aufgenommen und um eine feste Drehachse drehgelagert. In Figur 3 sind der Übersichtlichkeit halber die beiden Axialscheiben nicht dargestellt.

Das Antriebsteil 4 ist folglich über die Schenkelfeder 7 und die Koppelrolle 11 mit dem relativ dazu verdrehbaren Tilgermasseteil 8 gekoppelt. Die Schenkelfeder 7 respektive das Antriebsteil 4 ist dabei relativ zum Tilgermasseteil 8 verdrehbar, das heißt, dass sich die Relativposition von Schenkelfeder 7 zum Tilgermasseteil 8 ändern kann. Diese Änderung führt zu einer Veränderung des Kontaktpunkts der Koppelrolle 11 auf der Führungsbahn 10, was ausschlaggebend für die Variation des Steifigkeitsgrads der Schenkelfeder 7 und damit für den Grad der Bedämpfung ist.

Zu diesem Zweck ist, wie Figur 3 deutlich zeigt, die Führungsbahn 10 asymmetrisch ausgeführt. Es sei angenommen, dass Figur 3 die Nulllage zeigt, wenn also das Drehmoment schwingungsfrei und konstant anliegt. Der Kontaktpunkt der Koppelrolle 11 zur Führungsbahn 10 befindet sich angenommener Maßen im Bereich der Bahnmitte, gesehen in Umfangsrichtung.

Wird nun das Antriebsteil 4 in Drehrichtung, dargestellt durch den Pfeil P1, resultierend aus einer Schwingung, relativ zum Tilgermasseteil 8 verdreht so stellt sich eine entsprechende positive Schwingungsamplitude am +ΔM ein, wie durch den Pfeil P2 in Figur 3 gezeigt. Das heißt, dass man sich auf dem positiven Amplitudenast gemäß Figur 2 befindet.

Diese Relativverdrehung in Drehrichtung führt dazu, dass die Koppelrolle 11 auf der Führungsbahn 10 nach rechts läuft. In diesem Abschnitt 10a der Führungsbahn 10 steigt die Bahngeometrie ersichtlich an, das heißt, dass die Koppelrolle 11 quasi auf die ansteigende Bahn aufläuft. Es kommt, da dieser Bahnanstieg benachbart oder näher zum Anbindungsbereich der Schenkelfeder 7 am Antriebsteil 4 liegt, zu einer Verkürzung des freien Hebels des Schenkels 9 respektive der Schenkelfeder 7 und, resultierend aus dem Bahnanstieg, zu einer stärkeren Deformation des Schenkels 9 respektive der Schenkelfeder 7 und damit zu einer deutlichen Steifigkeitserhöhung, die vorliegend gefordert ist, da die Drehmomentamplitude bei einer Verdrehung in Drehrichtung deutlich stärker ansteigt als entgegengesetzt, siehe Figur 2.

Im Entlastungsfall, wenn sich also die Relativverdrehung umkehrt und es zur Rückstellung kommt, läuft die Koppelrolle 11 wieder in die entgegengesetzte Richtung vom Führungsbahnabschnitt 10a auf den zum freien Schenkelende hin laufenden Führungsbahnabschnitt 10b, der ersichtlich flacher ist, also deutlich weniger gewölbt ist als der Führungsbahnabschnitt 10a. Der Kontakt- oder Lagerpunkt der Koppelrolle 11 auf der Führungsbahn 10 wandert also nach links, der freie Hebel respektive die Hebellänge nimmt deutlich zu. Der Deformationsgrad ist auf diesem Hebelabschnitt deutlich geringer und damit auch die Steifigkeitsänderung. Dies korrespondiert mit der niedrigeren Momentenamplitude bei Drehung entgegensetzt der Drehrichtung, entsprechend Figur 2. Der Dämpfungsgrad muss also niedriger sein, was über die andere Bahngeometrie im Führungsbahnabschnitt 10b realisiert wird.

Das heißt, dass je nach Bewegungsrichtung der Schenkelfeder 7 respektive des Schenkels 9 relativ zum Tilgermasseteil 8 und damit je nach Bewegungsrichtung der Koppelrolle 11 auf der Führungsbahn 10 in Drehrichtung oder entgegensetzt der Drehrichtung eine variierende Steifigkeit seitens der Schenkelfeder 7 resultierend aus einer variierenden Deformation der Schenkelfeder 7 gegeben ist, die sehr gut auf den tatsächlichen Verlauf der Momentenamplitude abstimmbar ist, die dann entsprechend wirksam bedämpft werden kann.

Während bei der Ausgestaltung gemäß Figur 3 die Koppelrolle 11 um eine positionsfeste Drehachse 12 an dem Tilgermasseteil 8 drehgelagert ist, zeigt Figur 4 eine Ausgestaltung, bei der die Koppelrolle 11 zwischen den Axialscheiben 13 freibeweglich aufgenommen ist, das heißt, sie kann zwischen diesen in Umfangsrichtung wandern.

Gezeigt ist ausschnittsweise die Schenkelfeder 7 mit ihrer Führungsbahn 10, die ersichtlich auch hier stark unsymmetrisch ist. Gezeigt ist wiederum der folglich stark ansteigende Führungsbahnabschnitt 10a, an den sich zum freien Ende hin der Führungsbahnabschnitt 10b anschließt. In dieser Figur ist auch exemplarisch die radiale Variation des Kontaktpunktes der Koppelrolle 11 je nach Auslenkungs- oder Bewegungsrichtung dargestellt. Dargestellt ist zum einen die Nulllange N. Wandert die Koppelrolle 11 nach rechts, also erfolgt eine Verdrehung in Drehrichtung, so läuft der Kontaktpunkt auf den stark ansteigenden Führungsbahnabschnitt 10a auf, exemplarisch ist der Kontaktpunkt K₁ gezeigt, wenn die Koppelrolle 11 also relativ weit um die Strecke A nach rechts aufgelaufen ist.

In Figur 4 ist ebenso bei einer Bewegung der Koppelrolle 11 nach links in den Führungsbahnabschnitt 10b um dieselbe Strecke A der Kontaktpunkt K₂ gezeigt, das heißt, dass auch der Fall dargestellt ist, dass die Verdrehung in die entgegengesetzte Richtung erfolgt. Ersichtlich liegt, wie durch ΔK dargestellt ist, der Kontaktpunkt K₁ radial gesehen deutlich weiter außen als der Kontaktpunkt K₂.

Figur 4 zeigt des Weiteren das Tilgermasseteil 8 respektive das Masseelement 14, an dem eine zweite Führungsbahn 16 ausgebildet ist. Diese ist gegengleich zur ersten Führungsbahn 10, sie weist jedoch ebenfalls zwei unterschiedliche Bahnabschnitte 16a und 16b auf. Die Bahnabschnitte 16a und 16b entsprechen bevorzugt in ihrer Geometrie den Bahnabschnitten 10a und 10b, müssen es jedoch nicht.

Da die Koppelrolle 11 frei beweglich zwischen den Führungsbahnen 10 und 16a aufgenommen ist, läuft sie folglich bei einer Verdrehung der Schenkelfeder 7 in Drehrichtung sowohl auf den Bahnabschnitt 10a als auch auf den Bahnabschnitt 16a auf. Durch das Auflaufen auf den Bahnabschnitt 10a erfolgt eine Deformation respektive Verbiegung der Schenkelfeder 7 radial nach innen. Diese Deformation wird durch das Auflaufen auf den Bahnabschnitt 16a, der nach innen gerichtet ist, unterstützt, das heißt, dass sich die beiden Geometrien der Bahnabschnitte 10a und 16a quasi "addieren", der Deformationsgrad ist deutlich größer respektive doppelt so groß, verglichen mit der Ausgestaltung gemäß Figur 3.

Bei einer Verdrehung entgegengesetzt zur Drehrichtung läuft die Koppelrolle 11 auf die Bahnabschnitte 10b und 16b, der Deformationsgrad ist deutlich niedriger, auch die Steifigkeitsänderung ist dementsprechend geringer.

Figur 5 zeigt schließlich lediglich zu Vergleichszwecken die Situation bei symmetrisch ausgelegten Führungsbahnen 10, 16 an der Schenkelfeder 7 respektive dem Tilgermasseteil 8. Ersichtlich liegen die Kontaktpunkte K₁ und K₂ bei einer Auslenkung jeweils um die Strecke A ausgehend von der Nulllage N auf demselben Niveau, das heißt, dass die Steifigkeitsänderung respektive Deformation der Schenkelfeder 7 bei einer Bewegung aus der Nulllage in beide Richtungen identisch ist. Da auch die Führungsbahn 16 symmetrisch ausgeführt wird, ergibt sich auch aus einer Bewegung der Koppelrolle 11 auf der Führungsbahn 16 keine Variation des Deformations- und Steifigkeitsverhaltens.

Denkbar ist es schließlich, anstelle der in Figur 4 gezeigten unsymmetrischen Ausführung sowohl der Führungsbahn 10 als auch 16 nur eine der beiden unsymmetrisch auszuführen, gleichwohl aber die Koppelrolle 11 frei auf ihnen zu führen.

Alternativ ist es bezogen auf Figur 3 natürlich denkbar, die Führungsbahn 10 symmetrisch auszugestalten und die Führungsbahn 16 unsymmetrisch.

### Bezugszeichenliste

- 1: Drehschwingungstilger
- 2: Kupplungsgehäuse
- 3: Kupplungseinrichtung
- 4: Antriebsteil
- 5: Wandlereinrichtung
- 6: Innenverzahnung
- 7: Schenkelfeder
- 8: Tilgermasseteil
- 9: Schenkel
- 10: Führungsbahn
- 10a: Führungsbahnabschnitt
- 10b: Führungsbahnabschnitt
- 11: Koppelrolle
- 12: Drehachse
- 13: Axialscheibe
- 14: Massering
- 15: Lagerzapfen
- 16: Bahnabschnitt
- 16a: Bahnabschnitt
- 16b: Bahnabschnitt

- P1: Pfeil
- P2: Pfeil
- N: Nulllage
- K₁: Kontaktpunkt
- K₂: Kontaktpunkt

## Patentansprüche

1. Drehschwingungstilger umfassend ein um eine Drehachse drehbares Antriebsteil (4) und ein über wenigstens ein Federelement mit diesem gekoppeltes, gegen das Federelement um die Drehachse relativ zum Antriebsteil (4) verdrehbares Tilgermasseteil (8), wobei das als Schenkelfeder (7) ausgeführte Federelement mit einem Ende drehfest mit dem Antriebsteil (4) gekoppelt ist und mit dem anderen Ende über eine Koppelrolle (11), die auf wenigstens einer Führungsbahn (10, 16) rollt mit dem Tilgermasseteil (8) gekoppelt ist, **dadurch gekennzeichnet, dass** die Führungsbahn (10, 16) derart unsymmetrisch ist, dass die Schenkelfeder (7) bei einer Bewegung aus einer Nulllage (N) je nach Bewegungsrichtung der Koppelrolle (11) unterschiedlich stark deformiert wird.

2. Drehschwingungstilger nach Anspruch 1, **dadurch gekennzeichnet, dass** die Führungsbahn (10) an der Schenkelfeder (7) vorgesehen ist und die Koppelrolle (11) um eine feste Drehachse (12) drehbar an dem Tilgermasseteil (8) angeordnet ist.

3. Drehschwingungstilger nach Anspruch 1, **dadurch gekennzeichnet, dass** die Führungsbahn (16) an dem Tilgermasseteil (8) vorgesehen ist und die Koppelrolle (11) um eine feste Drehachse drehbar an der Schenkelfeder (7) angeordnet ist.

4. Drehschwingungstilger nach Anspruch 1, **dadurch gekennzeichnet, dass** sowohl an der Schenkelfeder (7) als auch an der Tilgermasse (8) eine Führungsbahn (10, 16) vorgesehen und die Koppelrolle (11) frei drehbar auf beiden Führungsbahnen (10, 16) rollt, wobei wenigstens eine Führungsbahn (10, 16) unsymmetrisch ist.

5. Drehschwingungstilger nach Anspruch 4, **dadurch gekennzeichnet, dass** beide Führungsbahnen (10, 16) unsymmetrisch sind.

6. Drehschwingungstilger nach Anspruch 5, **dadurch gekennzeichnet, dass** die beiden Unsymmetrien gleich sind.

7. Drehschwingungstilger nach einem der vorangehenden Ansprüche, **dadurch gekennzeichnet, dass** die Deformation bei einer sich aus der Nulllage (N) vom freien Ende der Schenkelfeder entfernenden Koppelrolle (11) größer ist als bei einer Bewegung der Koppelrolle (11) zum freien Ende der Schenkelfeder hin.

## Claims

1. A tuned mass damper comprising a drive part (4) rotatable about an axis of rotation and a damper mass part (8) that is coupled to the drive part by means of at least one spring element and rotatable against the spring element about the axis of rotation relative to the drive part (4), wherein the spring element designed as a torsion spring (7) is non-rotatably coupled at one end to the drive part (4) and is coupled at the other end to the damper mass part (8) by means of a coupling roller (11) that rolls on at least one guide track (10, 16), **characterised in that** the guide track (10, 16) is asymmetrical in such a way that the torsion spring (7) is severely deformed to varying degrees when moving from a zero position (N) depending on the direction of movement of the coupling roller (11).

2. The tuned mass damper according to claim 1, **characterised in that** the guide track (10) is provided on the torsion spring (7) and the coupling roller (11) is arranged on the damper mass part (8) so as to be rotatable about a fixed axis of rotation (12).

3. The tuned mass damper according to claim 1, **characterised in that** the guide track (16) is provided on the damper mass part (8) and the coupling roller (11) is arranged on the torsion spring (7) so as to be rotatable about a fixed axis of rotation.

4. The tuned mass damper according to claim 1, **characterised in that** a guide track (10, 16) is provided both on the torsion spring (7) and the damper mass (8) and the coupling roller (11) rolls in a freely rotatable manner on both guide tracks (10, 16), wherein at least one guide track (10, 16) is asymmetrical.

5. The tuned mass damper according to claim 4, **characterised in that** both guide tracks (10, 16) are asymmetrical.

6. The tuned mass damper according to claim 5, **characterised in that** the two asymmetries are identical.

7. The tuned mass damper according to one of the preceding claims, **characterised in that** the deformation is greater when the coupling roller (11) moves out of the zero position (N) from the free end of the torsion spring than when the coupling roller (11) moves towards the free end of the torsion spring.

## Revendications

1. Amortisseur de vibrations torsionnelles comprenant un élément d'entraînement (4) pouvant tourner autour d'un axe de rotation et un élément masse d'amortisseur (8) accouplé à celui-ci par le biais d'au moins un élément ressort et pouvant tourner en s'opposant à l'élément ressort autour de l'axe de rotation par rapport à l'élément d'entraînement (4), l'élément ressort conçu sous la forme d'un ressort de torsion (7) étant accouplé à l'aide d'une extrémité solidairement en rotation à l'élément d'entraînement (4) et étant accouplé à l'aide de l'autre extrémité par le biais d'un galet d'accouplement (11), lequel roule sur au moins une piste de guidage (10, 16), à l'élément masse d'amortisseur (8), **caractérisé en ce que** la piste de guidage (10, 16) est asymétrique de telle sorte que le ressort de torsion (7) se déforme, pendant un déplacement depuis une position zéro (N) en fonction du sens de déplacement du galet d'accouplement (11), à des degrés différents.

2. Amortisseur de vibrations torsionnelles selon la revendication 1, **caractérisé en ce que** la piste de guidage (10) est située sur le ressort de torsion (7) et le galet d'accouplement (11) est disposé sur l'élément masse d'amortisseur (8) de manière à pouvoir tourner autour d'un axe de rotation fixe (12).

3. Amortisseur de vibrations torsionnelles selon la revendication 1, **caractérisé en ce que** la piste de guidage (16) est située sur l'élément masse d'amortisseur (8) et le galet d'accouplement (11) est disposé sur le ressort de torsion (7) de manière à pouvoir tourner autour d'un axe de rotation fixe.

4. Amortisseur de vibrations torsionnelles selon la revendication 1, **caractérisé en ce qu'**une piste de guidage (10, 16) est située sur le ressort de torsion (7) et sur la masse d'amortisseur (8) et **en ce que** le galet d'accouplement (11) roule de manière à tourner librement sur les deux pistes de guidage (10, 16), au moins une piste de guidage (10, 16) étant asymétrique.

5. Amortisseur de vibrations torsionnelles selon la revendication 4, **caractérisé en ce que** les deux pistes de guidage (10, 16) sont asymétriques.

6. Amortisseur de vibrations torsionnelles selon la revendication 5, **caractérisé en ce que** les deux asymétries sont identiques.

7. Amortisseur de vibrations torsionnelles selon l'une quelconque des revendications précédentes, **caractérisé en ce que** la déformation est plus importante lorsque le galet d'accouplement (11) s'éloigne de la position zéro (N) depuis l'extrémité libre du ressort de torsion que lorsque le galet d'accouplement (11) se déplace vers l'extrémité libre du ressort de torsion.
